# EUROPEAN PATENT SPECIFICATION

(11) **EP 4 230 357 B1**
(45) Date of publication and mention of the grant of the patent: **03.09.2025**
(21) Application number: 22157810.7
(22) Date of filing: 21.02.2022
(51) Int. Cl.: B25J 9/00, B25J 15/00, B65H 3/06, B65H 5/08, B65H 5/14

(54) **MACHINE FOR HANDLING A LIMP MATERIAL, IN PARTICULAR TEXTILE ARTICLES**
MASCHINE ZUM HANDHABEN EINES LAPPIGEN MATERIALS, INSBESONDERE TEXTILWAREN
MACHINE DE TRAITEMENT D'UN MATÉRIAU SOUPLE, EN PARTICULIER D'ARTICLES TEXTILES

(43) Date of publication of application: 23.08.2023
(73) Proprietor: sewts GmbH, 81369 München (DE)
(72) Inventor: Doerks, Tim, 80805 München (DE); Abu Shaqra, Albara Dirar Mohammad, 80805 München (DE)
(74) Representative: Prinz & Partner mbB

(56) References cited:
- JP-A- 2002 166 085
- JP-A- 2010 000 562
- JP-A- 2018 164 958
- US-A- 4 578 013
- US-A1- 2020 290 200
- US-A1- 2021 078 184

## Description

The invention relates to a machine for handling limp material according to the preamble of claim 1.

The challenge associated with handling limp material such as textile articles is that the limp material does not have a defined shape. As a simple example, a tablecloth can have a spread out, rectangular shape, or it can be present in the form of a rather small, crumpled bundle. Any attempt to handle limp material in an automated manner requires bringing the limp material into a defined shape or at least positively identifying specific points of the limp material such as the edges.

The term "limp material" here refers to products for human necessities such as textile articles, in particular clothes, and to industrial products such as panels, covers or fibre mats. It further includes paper, sheets of foil material, and knitted articles. These examples are not exhaustive.

One example of a machine for handling limp material can be found in WO 2021/001 039 A1. The machine comprises two grippers which engage at a textile article at two points space from each other. The grippers can bring the textile article into a defined shape for further processing.

A machine with the features of the preamble of claim 1 is known from JP 2002 166085 A.

The object of the invention is to improve the handling capabilities of machines which are used for handling limp material.

In order to achieve this object, the invention provides a machine for handling limp material with the features of claim 1. The invention is based on the idea of adding additional functionality to the grippers which are known from the prior art. In the prior art, the limp material at which the gripper engages can be made to slide within the gripper when sufficient traction force is exerted on the limp material. The displacement mechanism which is provided according to the invention in the manipulator, allows controlling the sliding movement of the limp material within the manipulator. According to the invention, a receiving space is indeed provided between the base part and the pressing part, the receiving space being adapted for receiving an edge portion of the limp material and a sensor being arranged so as to detect the position of the edge portion within the receiving space.

In particular, the displacement mechanism allows actively moving the textile article with respect to the manipulator. It is therefore possible to make the limp material slide into a specific position with respect to the manipulator. In advanced embodiments, it is possible to make the manipulator follow a non-straight contour of the limp material so as to arrive at a position or specific point of the limp material which is beneficial regarding subsequent handling. The base part and the pressing part being displaceable with each other allow loading the limp material into the manipulator and clamping it therein with a predetermined and/or controllable force. It is also conceivable that the base part and the pressing part are displaceable with respect to each other by a predetermined and/or controllable distance. This avoids the necessity of force measurement. A wheel is particularly suitable for generating a sliding movement of the limp material with respect to the base part, with the extent of the sliding motion being easily controllable by the amount of rotation of the wheel. Assuming that it was possible to place the limp material with an edge within the receiving space, the position of the edge within the receiving space is particularly suitable for controlling a sliding displacement of the limp material by means of the wheel.

In a particularly simple embodiment, the displacement wheel is an omniwheel. The omniwheel can make the limp material slide with respect to the base part in a direction which is tangentially with respect to the omniwheel while at the same time allowing a low friction displacement in a direction which is parallel to the axis of rotation of the omniwheel.

In order to increase the friction between the wheel and the limp material, a guiding groove associated with the displacement wheel can be provided in the pressing part.

The sensor can be formed from discrete sensing elements arranged spaced from each other. The distance between the discrete sensing elements can be considered as a tolerance band in which the edge of the limp material should be. The discrete sensing elements allow detecting whether or not the edge is between the sensing elements. Should this not be the case, the limp material can be made to slide inwardly or outwardly by suitably rotating the displacement wheel until the edge is brought back to the desired position.

In one embodiment of the invention, a pair of displacement wheels is provided. Using a pair of displacement wheels allows for a better control of the displacement of the limp material with respect to the manipulator.

The pressing part can comprise a pair of pressing wheels and a pressing element, the pressing wheels and the pressing elements being moveable independently from each other with respect to the displacement wheels, particularly in a direction which is perpendicularly with respect to the plane in which the limp material is held between the displacement wheels. The force with which the limp material is clamped between the displacement wheels and the pressing wheels can be controlled via the displacement of the pressing wheels. Further, the pressing wheels and the pressing element can be retracted so as to allow for a loading and unloading of the limp material.

In one embodiment, the base part can be rotated around an axis which is perpendicular to the axis of rotation of the displacement wheels. Rotating the base part allows making the direction in which the limp material is displaced with respect to the base part consistent with the direction in which a contour or an edge of the limp material extends.

Preferably, the sensor is configured for detecting the presence of the limp material in a sensing area extending circumferentially around the base part, thereby providing the necessary information for sliding the limp material in the desired direction with respect to the base part.

Preferably, the sensor is formed from a plurality of discrete sensing elements arranged circumferentially around the base part. It is not necessary to have the sensor continuously monitor the circumference of the base part. Rather, it is sufficient to obtain the information in which sector of the circumference the limp material is present and in which it is not.

The sensor can also be formed from a camera system associated with an image recognition system adapted for evaluating the information provided by the camera and to extract therefrom the position of the limp material.

Instead of using a wheel for achieving a displacement of the limp material, any other element suitable for sliding the limp material with respect to the base part can be used. Examples are belts, translationally moveable pusher elements, reciprocating yaws, etc.

In one embodiment, the machine has two of the manipulators provided with at least one displacement wheel. The use of two manipulators allows for processing limp materials with a more complex outer contour and to displace the limp material with respect to the manipulator so as to reach predefined points of the limp material.

In one embodiment, the drive system comprises a linear drive on which the gripping devices are mounted, the linear drive being adapted for displacing the gripping devices from a loading position in which they are close to each other to a position in which they are spaced from each other, and vice versa. The linear drive is a mechanically simply and reliable system for obtaining the desired displacement of the gripping devices with respect to each other.

In an alternative embodiment, the drive system comprises two robot arms, each of them being provided with one gripping device, the robot arms being adapted for displacing the gripping devices from a loading position in which they are close to each other to a remote position in which they are spaced from each other, and vice versa. The robot arms assist the gripping devices in processing limp materials having a more complex contour, in particular a contour which is not only composed of a few straight portions.

The invention will now be explained with reference to the embodiments shown in the enclosed drawings. In the drawings,
Figure 1 shows a first embodiment of a machine with two gripping devices in a loading position,
Figure 2 shows the machine of Figure 1 with the two gripping devices in a position spaced apart,
Figure 3 shows a second embodiment of a machine according to the invention with two gripping devices in a loading position,
Figure 4 shows the machine of Figure 3 with the gripping devices in a position spaced apart,
Figure 5 shows a schematic sectional view of a manipulator according to a first embodiment,
Figure 6 shows a perspective view of the manipulator of Figure 5;
Figure 7 shows a side view of a manipulator according to a second embodiment;
Figure 8 shows a perspective view of the manipulator of Figure 7;
Figure 9 shows a second perspective view of the manipulator of Figure 7, with the manipulator being in a first working position;
Figure 10 the manipulator of Figure 7 in a second working position;
Figure 11 a schematic top view of the base part of the manipulator of Figure 7; and
Figure 12 schematically a machine according to a third embodiment in two different positions.

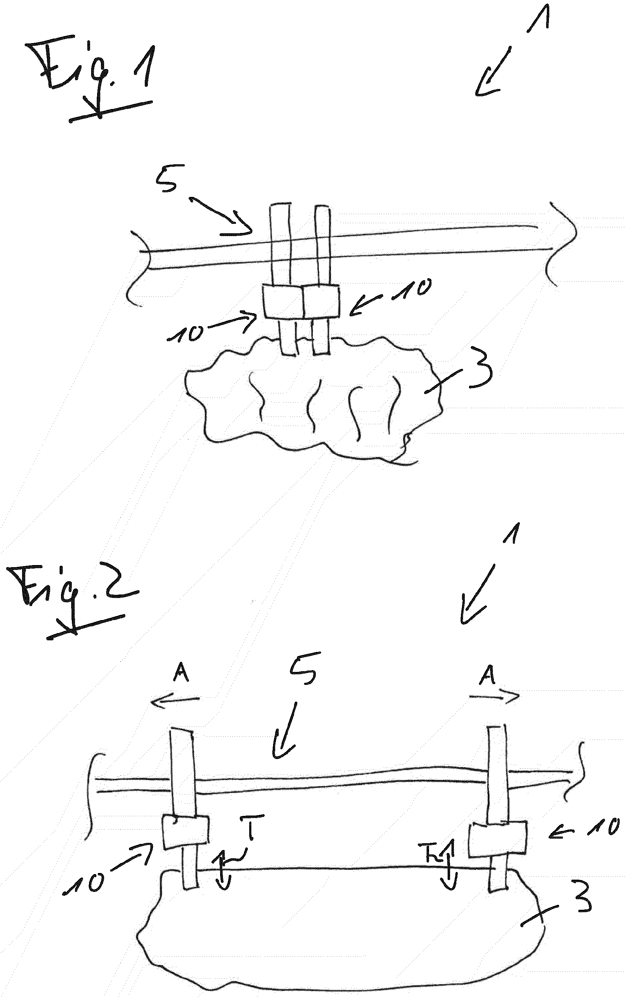

In Figures 1 and 2, a machine 1 for handling a limp material 3 is schematically shown. By way of example, the limp material will in the following be a textile article. It is to be kept in mind that the invention is applicable to any kind of limp material.

Machine 1 comprises two gripping devices 10, each of the gripping devices being adapted for receiving and holding the textile article 3 which is currently being handled.

The two gripping devices 10 are mounted to a drive system 5 with which the gripping devices 10 can be displaced with respect to each other. As can be seen by comparing Figures 1 and 2, drive system 5 allows for displacing gripping devices 10 from a loading position which is shown in Figure 1 and in which the gripping devices 10 are arranged close to each other or even in contact with each other, to a position shown in Figure 2 in which the gripping devices 10 are at a distance from each other.

Drive system 5 can in particular be a linear drive which allows displacing the two gripping devices in the direction of arrows A away from each other, and vice versa. It is of course possible to arrange of the gripping devices stationary and to displace only the other gripping device 10.

In the loading position, the textile article 3 is loaded to the gripping devices 10. By displacing the gripping devices 10 away from each other, the textile article is stretched and tensioned, with the edge of the textile article 3 received within the gripping devices 10 sliding through the gripping devices.

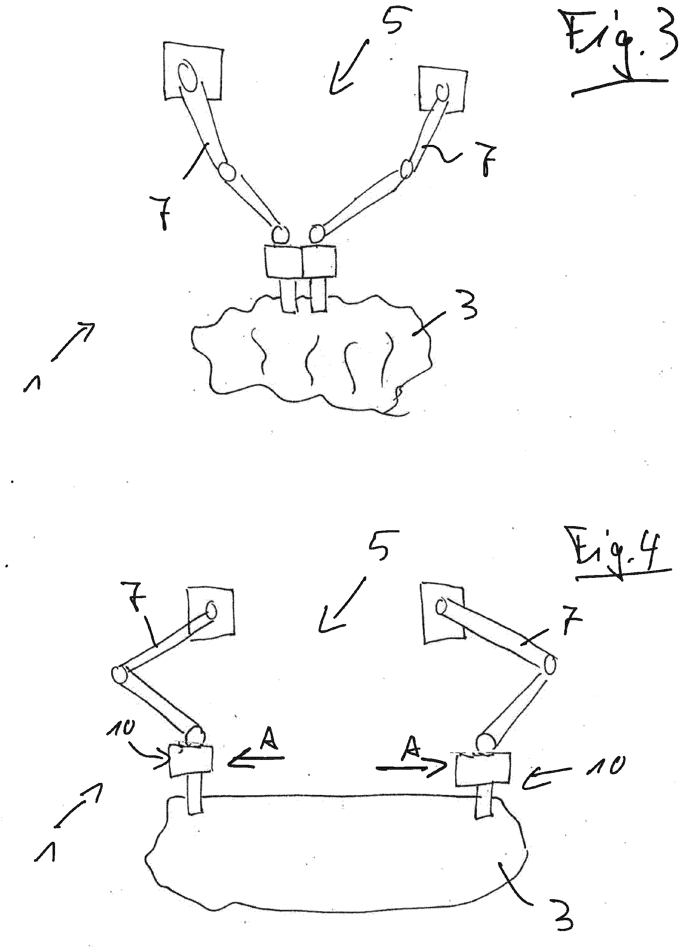

In Figures 3 and 4, a second embodiment of machine 1 for handling textile articles 3 is shown.

The difference between the first and the second embodiment is that the second embodiment uses robot arms 7 as the drive system for moving the gripping devices 10 with respect to each other.

In a variation of the second embodiment, it is possible to use one gripping device 10 which is mounted stationary, and to displace only the second gripping device 10 with respect to the stationary gripping device.

In a still further variation, it is possible to use one of the gripping devices 10 as a simple gripper which simply fixes a corner of the textile article placed there, and the other gripper 10 is displaced away from the first gripper and follows the contour of the edge.

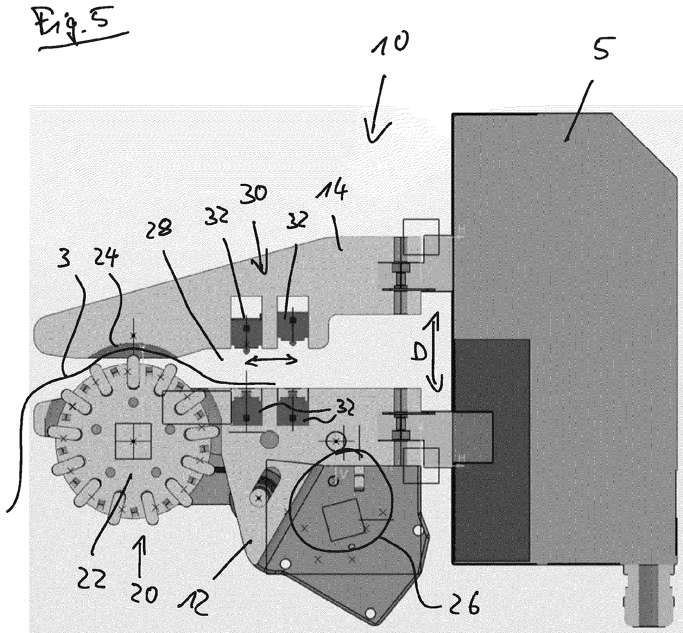

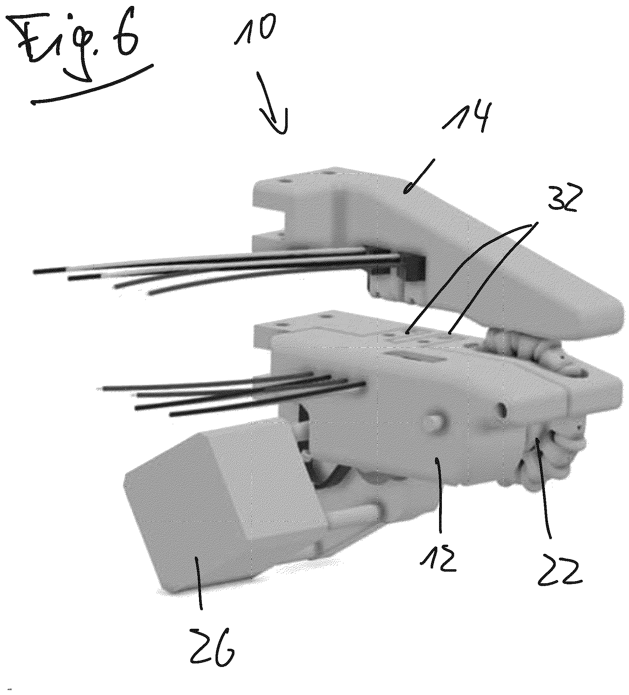

In Figures 5 and 6, a first embodiment of a gripping device 10 is shown. As the gripping device of Figures 5 and 6 is able to actively slide the textile article with respect to the gripping device (in addition to allowing for a passive sliding movement in response to a displacement of the gripping devices with respect to each other), the gripping device of Figures 5 and 6 is referred to as a manipulator.

Manipulator 10 has a base part 12 and a pressing part 14. Base part 12 and pressing part 14 can be displaced with respect to each other as indicated by arrow D between a receiving position in which they are spaced from each other, and a clamping position in which they are approached to each other such that the textile article 3 is clamped in the gap between base part 12 and pressing part 14.

Gripping device 10 is provided with a displacement mechanism 20 adapted for actively displacing the textile article in a direction which is generally within a plane in which the textile article is held in the manipulator. Looking at Figure 5, this plane is perpendicular with respect to the plane of the drawing and extends horizontally.

Displacement mechanism 20 comprises a displacement wheel 22 which is here rotatably mounted in base part 12. As can be seen in Figure 6, a portion of displacement wheel 22 protrudes over the surface of base part 12 which faces pressing part 14. In the position of base part 12 with respect to pressing part 14 as shown in Figures 5 and 6, the protruding portion of displacement wheel 22 engages into a guiding groove 24 formed in pressing part 14.

Displacement wheel 22 can be made to actively rotate in either direction by means of a motor element 26 schematically shown in Figure 5.

The gap between base part 12 and pressing part 14 which is inside of displacement wheel 22 forms a receiving space 28 for an edge of the textile article 3 received between base part 12 and pressing part 14 (please see Figure 5 in which the textile article 3 is schematically shown).

A sensor 30 is associated with the gripping device 10, adapted for detecting the position of the edge of the textile article 3.

In the embodiment shown in Figure 5, sensor 30 is formed from discrete sensing elements arranged spaced from each other in the direction of arrow T which designates a tolerance band in which the edge of textile article is supposed to be.

Sensing elements 32 can pairwise form for example a light barrier so that the presence of the textile article 3 can be detected.

Even though the space inwardly of the displacement wheel 22 is referred to as a receiving space for an edge of the textile article 3, the space can, in a first step, receive any portion of the textile article 3, e.g. a centre portion when the textile article is "thrown over" base part 12 in a condition in which pressing part 14 and base part 12 have been moved apart for receiving textile article 3. After placing textile article over base part 12, the textile article is manipulated until its edge is detected by sensor 30.

Displacement wheel 22 is here formed as an omniwheel. It is therefore possible to displace textile article 3 in the direction of arrow T by rotating displacement wheel 22 in a clockwise or counter-clockwise direction with respect to Figure 5, while at the same time allowing the textile article 3 to be displaced in a direction which is perpendicular to the plane of Figure 5, for example by increasing the distance between the two gripping devices 10.

With reference to Figure 2 and assuming that each of the gripping devices 10 is provided with a displacement mechanism 20, the edge of textile article 3 can be controlled, during the step of moving apart the gripping devices 10, by suitably controlling the displacement mechanism so as to displace the portion of the textile article gripped within the gripping devices, in the direction of arrow T. The extent of displacement of textile article 3 can very easily be controlled with sensor 30 which detects the position of the edge of textile article 3. As can be seen in Figure 5, the information that both pairs of sensing elements 32 are blocked by textile article 3 can be interpreted as the textile article 3 to be too far inwardly in the receiving space 28, resulting in a counter-clockwise movement of displacement wheel 22 until the inner sensing element 32 does not longer detect the presence of the textile article. The information that both sensing elements 32 do not detect the textile article can be interpreted as the textile article being not sufficiently within receiving space 28, resulting in a clockwise rotation of displacement wheel 22 until the outer sensing element 32 again detects the presence of the textile article.

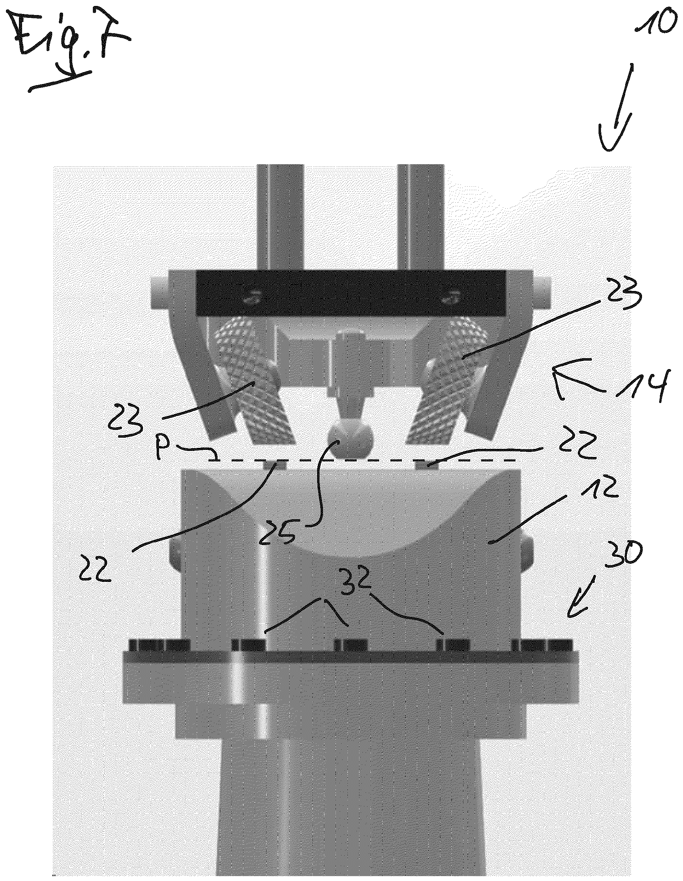

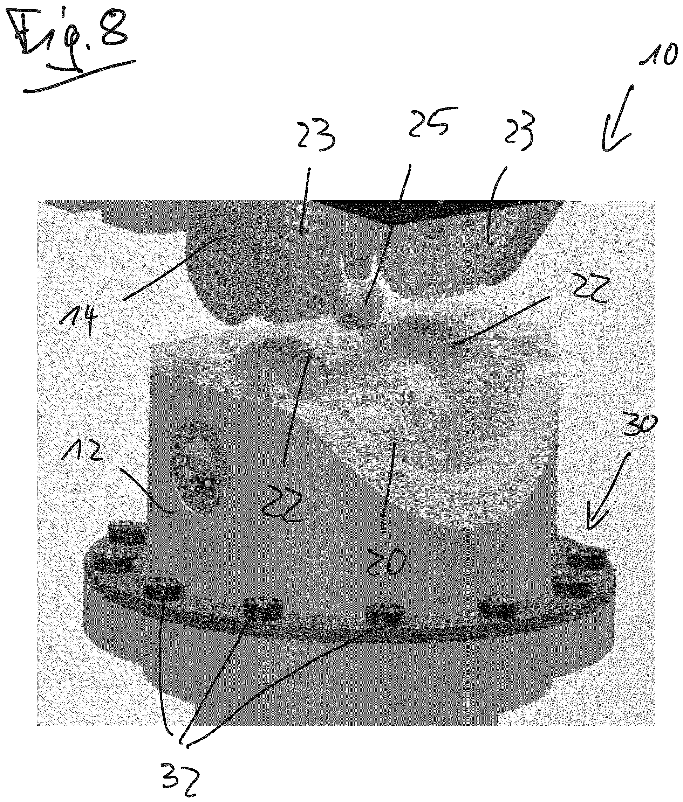

A second embodiment of gripping devices 10 formed as manipulators is shown in Figures 7 to 10. For components known from the first embodiment, the same reference numerals are used, and reference is made to the above comments.

While the first embodiment uses a gripping device in the form of two jaws cooperating with each other, the second embodiment has a post-like or pillar-like base 12 with which the pressing part 14 cooperates. A further difference between the first and the second embodiment is that the second embodiment uses two displacement wheels 22 instead of a single displacement wheel.

Displacement wheels 22 are mounted rotatably within base part 12. They can be actively driven by means of a motor which is not shown here. The motor is adapted for rotating both displacement wheels 22 in the same direction and with the same speed of rotation. As an example, both displacement wheels can be fixedly connected to one and the same drive shaft.

In order to increase the friction with the textile article to be displaced, displacement wheels 23 can be provided with a suitable configuration at their outer circumference. As shown in Figures 7 to 10, displacement wheels 22 here have a plurality of teeth.

As an alternative to teeth, the displacement wheels 22 can be provided with a rubber coating or any other surface which promotes friction between the displacement wheels and the textile article.

Pressing part 14 comprises two pressing wheels 23 arranged to cooperate with displacement wheels 22. Pressing wheels 23 have a serrated circumference.

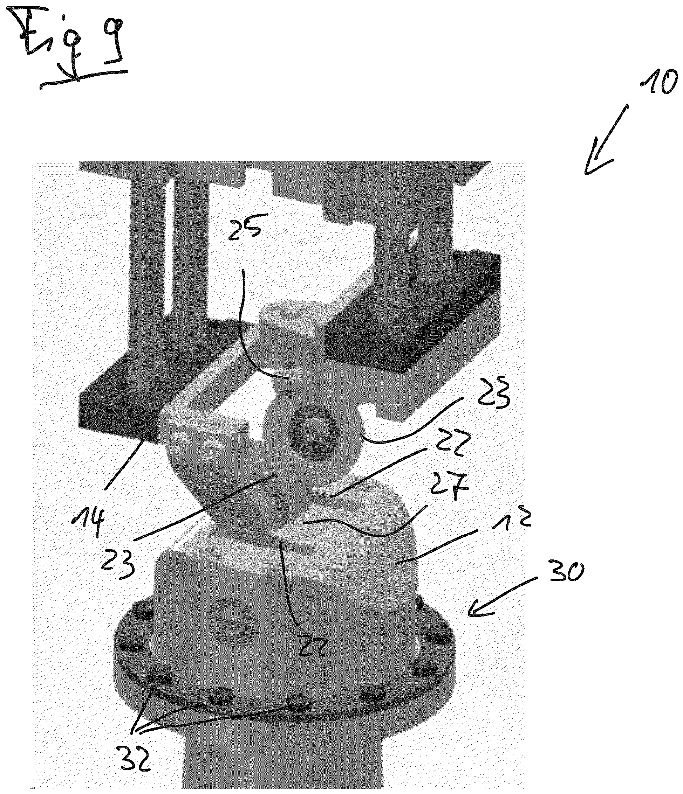

Pressing part 14 furthermore comprises a pressing element 25 which can be displaced independent from pressing wheels 23 towards base part 12 and away therefrom. Pressing element 25 here has a spherical surface which is adapted to cooperate with a guiding recess 27 in base part 12. (please see Figure 9).

Gripping device 10 as shown in Figures 7 to 10 is configured for receiving and clamping the textile article in a plane P which is schematically shown in Figure 7. By rotating the displacement wheels 22, textile article 3 can be displaced in this plane P in a direction which is a tangent to the outer circumference of displacement wheels 22. In other words, textile article 3 can be displaced, when looking at Figure 7, in a direction which is perpendicular to the plane of the drawing.

For loading the textile article 3 to gripping device 10, pressing part 14 and pressing element 25 are retracted. When the textile article is placed over base part 12, pressing part 14 is lowered into the position shown in Figure 9. In this position, the textile article is clamped between displacement wheels 22 and pressing wheels 23. Accordingly, rotating the displacement wheels 22, results in a displacement of the textile article with respect to base part 12.

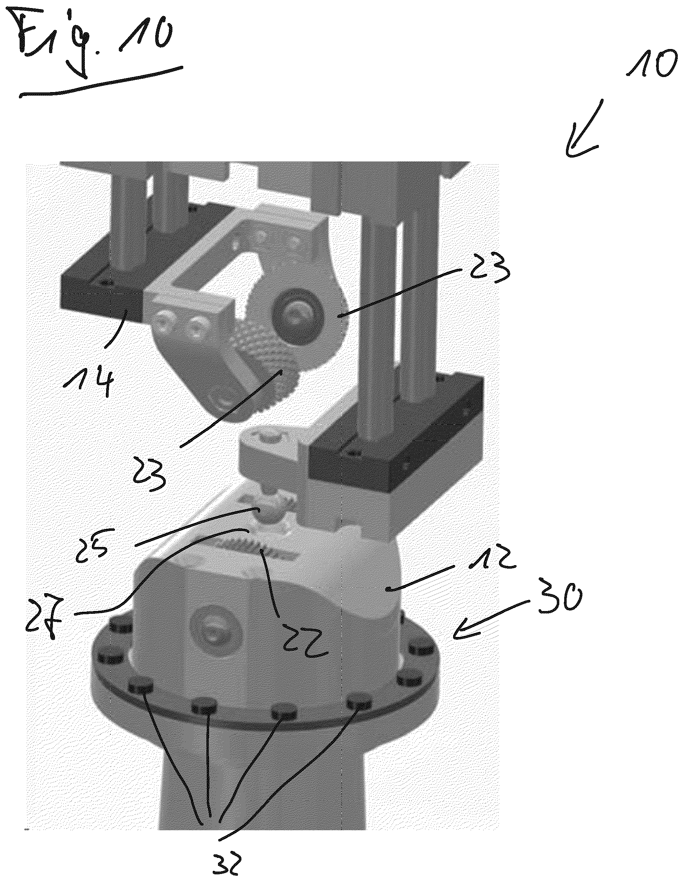

When the orientation of the textile article with respect to base part 12 is to be changed, pressing element 25 is lowered so as to clamp the textile article between the pressing part and the guiding recess 27, while pressing part 14 is moved upwardly (please see Figure 10). In this condition, the textile article can be rotated with respect to base 12 by overcoming the (reduced) frictional forces between pressing element 25 and guiding recess 27. When the textile article has been brought into the desired position, pressing part 14 is lowered so as to again clamp the textile article between the displacement wheels and the pressing wheels, and pressing element 25 can be retracted.

Changing the orientation of the textile article allows "navigating" to a desired point on the textile article, for example by displacing the textile article in different directions with respect to base part 12.

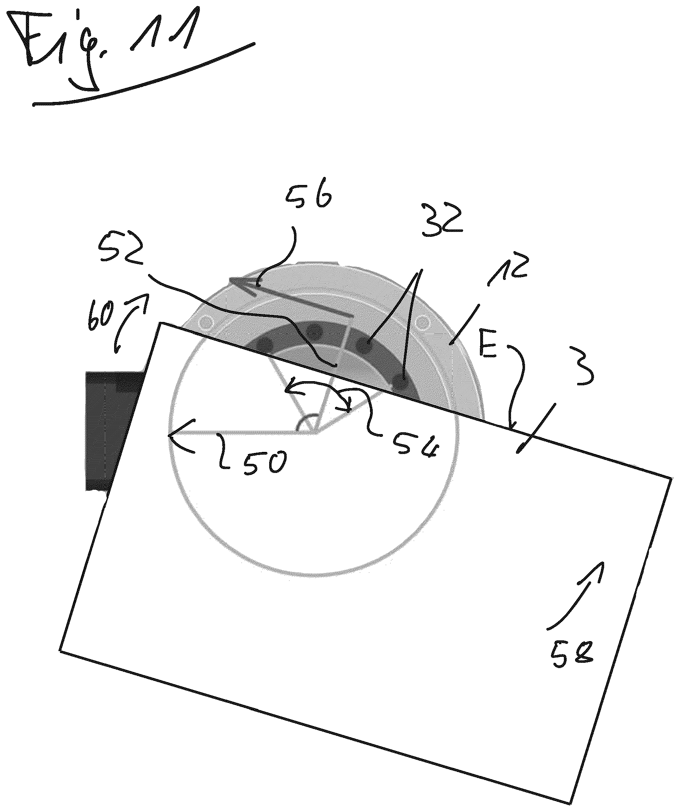

Figure 11 shows a schematic view of the base part 12 and a textile article 3, with the pressing part 14 not being shown here for better clarity.

At base part 12, some of the plurality of sensor elements 32 forming in their entirety the sensor, is shown. Sensing elements 32 are arranged circumferentially around base part 12.

In a manner similar to the first embodiment, sensor 30 is formed from a plurality of discrete sensing elements 32. These are spaced in equal intervals around base part 12.

Discrete sensing elements 32 allow detecting the position and the orientation of textile article 3, in particular the position of an edge E of textile article 3. Assuming that textile article 3 is randomly placed over base part 12 at the beginning of the handling process, all sensing elements 32 are covered. By rotating displacement wheels 22, textile article is displaced with respect to base part 12 in a direction which is designated in Figure 11 with arrow 50.

At a certain point, textile article 3 will be displaced so far that some of the sensing elements 32 are exposed. This condition is shown in Figure 11 where four of the sensing elements 32 are shown as exposed. Assuming that edge E is straight, the orientation of edge E can be determined as being perpendicular to a line 52 which forms the centre of the sector 54 defined by exposed sensing elements 32.

It is apparent that the sensing accuracy is the higher the more sensing elements are provided around the circumference of base part 12.

If the orientation of edge E has been determined and it is further intended to displace textile article 3 along edge E, the direction of displacement of textile article 3 has to be made parallel to edge E. In the condition shown in Figure 11, these two directions are not yet parallel. The actual direction of displacement is designated with arrow 50 while the direction of edge E (designated with arrow 56) is not parallel to direction 50.

In a first step, pressing part 14 is retracted after pressing element 25 has been lowered so as to press textile article 3 against base part 12. Then, either textile article 3 is rotated with respect to base part 12 in the direction of arrow 58 until the orientation of edge E is parallel to the displacement direction 50. This can be achieved with a second gripping device which engages at textile article 3. In the alternative, textile article 3 is held stationary and base part 12 is rotated in the direction of arrow 60 with respect to textile article 3.

Once the orientation of edge E of textile article 3 is parallel with the displacement direction 50 defined by displacement wheels 22 in base part 12, textile article 3 can be further displaced with respect to base part 12 while the position of edge E with respect to base part 12 is continuously monitored with sensor 30. A change of the sector of sensing elements 32 not covered by textile article 3 indicates that the textile article 3 is displaced in a direction which is not parallel to its edge E. Accordingly, further intervention is necessary.

Another way of changing the orientation of textile article 3 with respect to base part 12 is to use a drive which is adapted for rotating the two displacement wheels 22 either in opposite directions or independent from each other so that textile article 3 can be rotated around an axis which is arranged between the two displacement wheels 22 or around an axis which is arranged outside the two displacement wheels.

For rotating textile article 3, the displacement wheels 3 are driven in the required manner (e.g. opposite to each other). In this embodiment, pressing element 25 can be dispensed with.

In a still further variant, the displacement wheels 12 can be formed as omniwheels, allowing a displacement of textile article 3 in a direction which is oblique or transverse to the direction of advancement of the textile article defined by the rotation of the displacement wheels.

In a yet further embodiment, base part 12 comprises a set of displacement wheels 22 of the type shown in Figures 7 to 10 (which drive textile article in a direction defined by the orientation of the axis of rotation of displacement wheels 22) and an omniwheels (or two omniwheels) which allow for a lateral displacement of textile article. The different types of displacement wheels are mounted at base part 14 moveable between a retracted position and an active position so that one of the types of displacement wheels is in an active position while the other type is in the retracted position. This allows changing between two different modes of operation, one with a defined direction of displacement of textile article 3 and the other with a possibility of lateral displacement of textile article 3 in addition to the displacement generated by rotation of the omniwheels(s).

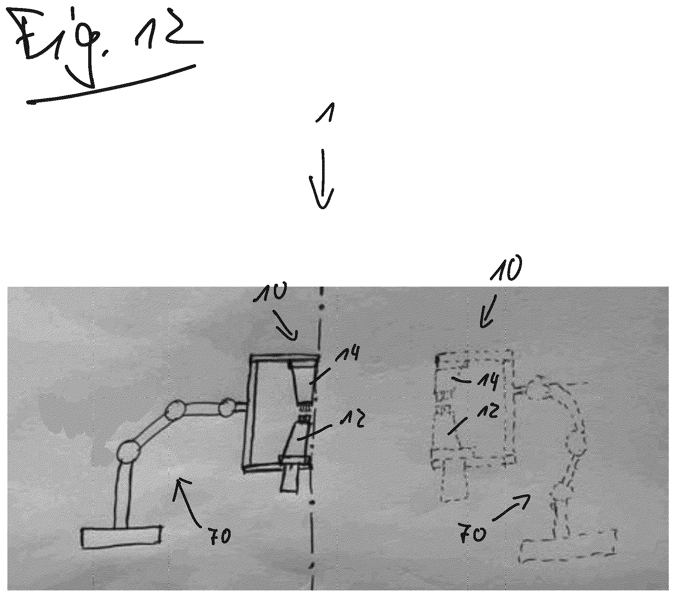

Figure 12 shows an embodiment of a machine in which two of the manipulators shown in Figures 7 to 10 are used, which are here mounted to a robot arm 70 each having six degrees of freedom. The robot arms form drive system 5.

The starting position is shown in continuous lines on the left side of Figure 12. Both gripping devices 10 are placed close to each other, and the textile article is gripped between the two gripping devices 10. After the textile article has been loaded to the gripping devices 10, the gripping devices 10 are moved away from each other so as to straighten the textile article. At the same time, the textile articles are displaced with respect to the base parts 12 until an edge of the textile article is detected. Thereafter, the textile article is displaced with respect to the base part 12 along the detected edge until a predefined point at the textile article has been reached.

As the gripping devices 10 are mounted to robot arms 70, complex movements are possible which allow the manipulators to follow complex contours and edges of the textile article.

Stated generally, the machine according to the invention can be considered as a linear positioning device for spreading and placing limp materials by using two actively controlled manipulators and sensors to firstly reach a straight boundary segment of the textile article and then perform linear edge tracing while stopping upon corner recognition.

Even though the example shows two gripping devices or manipulators which cooperate with each other, it is possible to use more than two gripping devices in order to process more complex textile articles or to increase the processing speed.

## Claims

1. A machine (1) for handling limp material (3), in particular textile articles, the machine (1) comprising at least a first and a second gripping device (10) adapted for gripping the same piece of limp material (3) at the same time, at least one of the gripping devices (10) being connected to a drive system (5) adapted for displacing the gripping devices (10) with respect to each other, one of the gripping devices (10) being a manipulator (10) having a displacement mechanism (20) adapted for actively displacing the limp material (3) in a direction which is generally within a plane in which the limp material (3) is held in the manipulator (10), the machine (1) further comprising at least one sensor (30) adapted for detecting the limp material (3) and/or regions of interest, wherein the manipulator (10) comprises a base part (12) and a pressing part (14) which are displaceable with respect to each other, the displacement mechanism (20) being provided at the base part (12), the displacement mechanism (20) comprises at least one displacement wheel (22) which is arranged so as to engage at the limp material (3), **characterized in that** a receiving space (28) is provided between the base part (12) and the pressing part (14), the receiving space (28) being adapted for receiving an edge portion (E) of the limp material (3), the sensor (30) being arranged so as to detect the position of the edge portion (E) within the receiving space (28).

2. The machine of claim 1 wherein the displacement wheel (22) is an omniwheel.

3. The machine of any of the preceding claims wherein a guiding groove (24) associated with the displacement wheel (22) is provided in the pressing part (14).

4. The machine of any of the preceding claims wherein the sensor (30) is formed from discrete sensing elements (32) arranged spaced from each other.

5. The machine of any of claims 1 and 2 wherein a pair of displacement wheels (22) is provided.

6. The machine of claim 5 wherein the pressing part (14) comprises a pair of pressing wheels (23) and a pressing element (25), the pressing wheels (23) and the pressing element (25) being moveable independently from each other with respect to the displacement wheels (22), particularly in a direction which is perpendicularly with respect to the plane in which the limp material (3) is held between the displacement wheels (22) and the pressing wheels (23).

7. The machine of claim 5 or claim 6 wherein a drive for the displacement wheels is provided which is adapted for rotating the wheels independent from each other or in opposite directions.

8. The machine of any of claims 5 to 7 wherein the sensor (30) is configured for detecting the presence of the limp material (3) in a sensing area extending circumferentially around the base part (12).

9. The machine of claim 8 wherein the sensor (30) is formed from a plurality of discrete sensing elements (32) arranged circumferentially around the base part (12).

10. The machine of any of the preceding claims wherein the base part (12) and/or the pressing part (14) can be rotated around an axis which is perpendicular to the axis of rotation of the displacement wheels (23).

11. The machine of any of the preceding claims wherein two manipulators (10) are provided.

12. The machine of any of the preceding claims wherein the drive system (5) comprises a linear drive on which the gripping devices (10) are mounted, the linear drive being adapted for displacing the gripping devices (10) from a loading position in which they are close to each other to a position in which they are spaced from each other, and vice versa.

13. The machine of any of claims 1 to 11 wherein the drive system (5) comprises two robot arms (7), each of them being provided with one gripping device (10), the robot arms (7) being adapted for displacing the gripping devices (10) from a loading position in which they are close to each other to a position in which they are spaced from each other, and vice versa.

## Patentansprüche

1. Maschine (1) zur Handhabung von biegeschlaffem Material (3), insbesondere von textilen Artikeln, wobei die Maschine (1) wenigstens eine erste und eine zweite Greifvorrichtung (10) umfasst, die dazu geeignet sind, dasselbe Stück biegeschlaffes Material (3) gleichzeitig zu greifen, wobei wenigstens eine der Greifvorrichtungen (10) mit einem Antriebssystem (5) verbunden ist, das dazu geeignet ist, die Greifvorrichtungen (10) relativ zueinander zu verschieben, wobei eine der Greifvorrichtungen (10) ein Manipulator (10) ist, der einen Verlagerungsmechanismus (20) aufweist, der dazu geeignet ist, das biegeschlaffe Material (3) aktiv in einer Richtung zu verlagern, die insgesamt innerhalb einer Ebene liegt, in der das biegeschlaffe Material (3) in dem Manipulator (10) gehalten wird, wobei die Maschine (1) ferner wenigstens einen Sensor (30) umfasst, der dazu geeignet ist, das biegeschlaffe Material (3) und/oder Bereiche von Interesse zu erfassen, wobei der Manipulator (10) ein Basisteil (12) und ein Pressteil (14) umfasst, die relativ zueinander verschiebbar sind, wobei der Verlagerungsmechanismus (20) am Basisteil (12) vorgesehen ist, wobei der Verlagerungsmechanismus (20) wenigstens ein Verlagerungsrad (22) umfasst, das so angeordnet ist, dass es an dem biegeschlaffen Material (3) angreift, **dadurch gekennzeichnet, dass** zwischen dem Basisteil (12) und dem Pressteil (14) ein Aufnahmeraum (28) vorgesehen ist, wobei der Aufnahmeraum (28) zur Aufnahme eines Randabschnitts (E) des biegeschlaffen Materials (3) eingerichtet ist, wobei der Sensor (30) so angeordnet ist, dass er die Position des Randabschnitts (E) innerhalb des Aufnahmeraums (28) erfasst.

2. Maschine nach Anspruch 1, bei der das Verlagerungsrad (22) ein omnidirektionales Rad ist.

3. Maschine nach einem der vorhergehenden Ansprüche, bei der in dem Pressteil (14) eine dem Verlagerungsrad (22) zugeordnete Führungsnut (24) vorgesehen ist.

4. Maschine nach einem der vorhergehenden Ansprüche, bei der der Sensor (30) aus voneinander beabstandet angeordneten diskreten Erfassungselementen (32) gebildet ist.

5. Maschine nach einem der Ansprüche 1 und 2, bei der zwei Verlagerungsräder (22) vorgesehen sind.

6. Maschine nach Anspruch 5, bei der das Pressteil (14) zwei Pressräder (23) und ein Presselement (25) umfasst, wobei die Pressräder (23) und das Presselement (25) in Bezug auf die Verlagerungsräder (22) unabhängig voneinander bewegbar sind, insbesondere in einer Richtung, die senkrecht zu der Ebene ist, in der das biegeschlaffe Material (3) zwischen den Verlagerungsrädern (22) und den Pressrädern (23) gehalten wird.

7. Maschine nach Anspruch 5 oder Anspruch 6, bei der ein Antrieb für die Verlagerungsräder vorgesehen ist, der dazu eingerichtet ist, die Räder unabhängig voneinander oder gegenläufig zu drehen.

8. Maschine nach einem der Ansprüche 5 bis 7, bei der der Sensor (30) dazu ausgebildet ist, die Gegenwart des biegeschlaffen Materials (3) in einem Erfassungsbereich, der sich umfangsmäßig um das Basisteil (12) erstreckt, zu erfassen.

9. Maschine nach Anspruch 8, bei der der Sensor (30) aus mehreren diskreten Erfassungselementen (32) gebildet ist, die umfangsmäßig um das Basisteil (12) herum angeordnet sind.

10. Maschine nach einem der vorhergehenden Ansprüche, bei der das Basisteil (12) und/oder das Pressteil (14) um eine Achse gedreht werden kann bzw. können, die senkrecht zur Drehachse der Verlagerungsräder (23) ist.

11. Maschine nach einem der vorhergehenden Ansprüche, bei der zwei Manipulatoren (10) vorgesehen sind.

12. Maschine nach einem der vorhergehenden Ansprüche, bei der das Antriebssystem (5) einen Linearantrieb umfasst, an dem die Greifvorrichtungen (10) angebracht sind, wobei der Linearantrieb dazu eingerichtet ist, die Greifvorrichtungen (10) aus einer Ladeposition, in der sie sich nahe beieinander befinden, in eine Position zu verschieben, in der sie voneinander beabstandet sind, und umgekehrt.

13. Maschine nach einem der Ansprüche 1 bis 11, bei der das Antriebssystem (5) zwei Roboterarme (7) umfasst, die jeweils mit einer Greifvorrichtung (10) versehen sind, wobei die Roboterarme (7) dazu eingerichtet sind, die Greifvorrichtungen (10) aus einer Ladeposition, in der sie sich nahe beieinander befinden, in eine Position zu verschieben, in der sie voneinander beabstandet sind, und umgekehrt.

## Revendications

1. Machine (1) pour la manipulation de matériau souple (3), en particulier d'articles textiles, la machine (1) comprenant au moins un premier et un deuxième dispositif de préhension (10) aptes à saisir simultanément le même morceau de matériau souple (3), au moins l'un des dispositifs de préhension (10) étant relié à un système d'entraînement (5) apte à déplacer les dispositifs de préhension (10) l'un par rapport à l'autre, l'un des dispositifs de préhension (10) étant un manipulateur (10) présentant un mécanisme de déplacement (20) apte à déplacer activement le matériau souple (3) dans un sens généralement dans un plan dans lequel le matériau souple (3) est maintenu dans le manipulateur (10), la machine (1) comprenant en outre au moins un capteur (30) apte à détecter le matériau souple (3) et/ou des zones d'intérêt, le manipulateur (10) comprenant une partie de base (12) et une partie de pression (14) qui sont déplaçables l'une par rapport à l'autre, le mécanisme de déplacement (20) étant prévu sur la partie de base (12), le mécanisme de déplacement (20) comprenant au moins une roue de déplacement (22) qui est agencée de manière à venir en prise avec le matériau souple (3), **caractérisée en ce qu'**un espace de réception (28) est prévu entre la partie de base (12) et la partie de pression (14), l'espace de réception (28) étant apte à recevoir un tronçon de bord (E) du matériau souple (3), le capteur (30) étant agencé de manière à détecter la position du tronçon de bord (E) à l'intérieur de l'espace de réception (28).

2. Machine selon la revendication 1, la roue de déplacement (22) étant une roue omnidirectionnelle.

3. Machine selon l'une des revendications précédentes, une rainure de guidage (24) associée à la roue de déplacement (22) étant prévue dans la partie de pression (14).

4. Machine selon l'une des revendications précédentes, le capteur (30) étant formé à partir d'éléments de détection discrets (32) agencés à distance les uns des autres.

5. Machine selon l'une des revendications 1 et 2, une paire de roues de déplacement (22) étant prévue.

6. Machine selon la revendication 5, la partie de pression (14) comprenant une paire de roues de pression (23) et un élément de pression (25), les roues de pression (23) et l'élément de pression (25) étant mobiles indépendamment les uns des autres par rapport aux roues de déplacement (22), en particulier dans un sens perpendiculaire au plan dans lequel le matériau souple (3) est maintenu entre les roues de déplacement (22) et les roues de pression (23).

7. Machine selon la revendication 5 ou la revendication 6, un entraînement pour les roues de déplacement étant prévu, lequel est apte à faire tourner les roues indépendamment les unes des autres ou dans des sens opposés.

8. Machine selon l'une des revendications 5 à 7, le capteur (30) étant réalisé de manière à détecter la présence du matériau souple (3) dans une zone de détection s'étendant circonférentiellement autour de la partie de base (12).

9. Machine selon la revendication 8, le capteur (30) étant formé à partir d'une pluralité d'éléments de détection discrets (32) agencés circonférentiellement autour de la partie de base (12).

10. Machine selon l'une des revendications précédentes, la partie de base (12) et/ou la partie de pression (14) étant aptes à être tournées autour d'un axe perpendiculaire à l'axe de rotation des roues de déplacement (23).

11. Machine selon l'une des revendications précédentes, deux manipulateurs (10) étant prévus.

12. Machine selon l'une des revendications précédentes, le système d'entraînement (5) comprenant un entraînement linéaire sur lequel sont montés les dispositifs de préhension (10), l'entraînement linéaire étant apte à déplacer les dispositifs de préhension (10) d'une position de chargement dans laquelle ils sont proches l'un de l'autre à une position dans laquelle ils sont espacés l'un de l'autre, et vice versa.

13. Machine selon l'une des revendications 1 à 11, le système d'entraînement (5) comprenant deux bras robotisés (7), chacun d'eux étant muni d'un dispositif de préhension (10), les bras robotisés (7) étant aptes à déplacer les dispositifs de préhension (10) d'une position de chargement dans laquelle ils sont proches l'un de l'autre à une position dans laquelle ils sont espacés l'un de l'autre, et vice versa.
